# EUROPÄISCHE PATENTSCHRIFT

(11) **EP 3 048 861 B1**
(45) Veröffentlichungstag und Bekanntmachung des Hinweises auf die Patenterteilung: **02.08.2017**
(21) Anmeldenummer: 15201679.6
(22) Anmeldetag: 21.12.2015
(51) Int. Cl.: H05B 6/12

(54) **INDUKTIONSHEIZVORRICHTUNG**
INDUCTION HEATING DEVICE
DISPOSITIF DE CHAUFFAGE À INDUCTION

(30) Priorität: 21.01.2015 AT 92015 U
(43) Veröffentlichungstag der Anmeldung: 27.07.2016
(73) Patentinhaber: FLUXRON Solutions AG, 8580 Amriswil (CH)
(72) Erfinder: Jäckle, Benno, 9308 Lämmenschwil (CH)
(74) Vertreter: Hofmann, Ralf U.

(56) Entgegenhaltungen:
- CN-A- 102 954 506
- DE-A1- 2 357 169
- JP-U- S5 086 756

## Beschreibung

Die Erfindung bezieht sich auf eine Induktionsheizvorrichtung für ein Induktionskochfeld, umfassend eine Spuleneinheit, welche zumindest eine Induktionsspule zur Erzeugung eines Induktionsfeldes aufweist, und eine Umrichtereinheit, welche zumindest einen Umrichter zur Ansteuerung der Induktionsspule aufweist und mit welcher die Spuleneinheit mechanisch verbunden ist.

Bei einem Induktionskochfeld befindet sich unterhalb einer Kochfeldplatte, üblicherweise aus Glaskeramik, eine Induktionsheizvorrichtung, die auch als Induktionsgenerator bezeichnet wird. Eine Induktionsspule der Induktionsheizvorrichtung erzeugt ein Induktionsfeld in Form eines magnetischen Wechselfeldes, welches in einem auf der Kochfeldplatte angeordneten Topf durch Induktion Wirbelströme erzeugt, die den Topf durch dessen ohmschen Widerstand aufheizen. Übliche Frequenzen liegen im Bereich von 20 kHz bis 50 kHz.

Es ist bekannt, separate Baueinheiten für die Induktionsspule und für die Elektronik zur Ansteuerung der Induktionsspule vorzusehen. Die die Induktionsspule aufweisende Spuleneinheit kann damit von der den Umrichter zur Ansteuerung der Induktionsspule aufweisenden Umrichtereinheit räumlich getrennt werden, sodass die erhöhte Temperatur welche die Spuleneinheit im Betrieb der Induktionsheizvorrichtung annimmt, wirksam von der Elektronik der Induktionsheizvorrichtung getrennt ist. Die Montage und Demontage der Induktionsheizvorrichtung im Herd wird dadurch allerdings erschwert und im Herd muss ein entsprechender Raum zur Aufnahme der Umrichtereinheit vorgesehen sein. Häufig ist unterhalb der Kochfeldplatte ein Zwischenraum zwischen der Kochfeldplatte und einer unteren Begrenzungsplatte vorgesehen, wobei sich unterhalb der unteren Begrenzungsplatte eine andere Einrichtung, wie ein Backrohr, ein Einbauschrank usw. befindet und im Zwischenraum mehrere nebeneinander angeordnete Induktionsheizvorrichtungen unterzubringen sind.

Es ist weiters bekannt, eine Induktionsheizvorrichtung, bei der die Spuleneinheit und Umrichtereinheit als Baueinheit ausgeführt sind und die Elektronik entsprechend thermisch zu isolieren und/oder kühlen ist, an eine die Kochfeldplatte umgebende Korpusplatte anzuschrauben, wobei die Spuleneinheit federnd an die Unterseite der Kochfeldplatte angedrückt ist. Nachteile sind hier der erhöhte Montageaufwand und die erforderliche thermische Isolierung bzw. der erhöhte Kühlaufwand.

Induktionsheizvorrichtungen, bei welchen die Spuleneinheit federelastisch mittels Schraubenfedern an die Unterseite einer Kochfeldplatte angedrückt wird, sind im Weiteren aus der JP 2012054128 A, US 2010/0044367 A1 und CN 102954506 A bekannt.

Eine Induktionsheizvorrichtung, bei welcher die Induktionsspule und der Umrichter zu einer gemeinsamen Baueinheit integriert sind, geht beispielsweise aus der WO 2006/081967 A1 hervor. Die WO 2006/032292 A1 zeigt mehrere unter einer Kochfeldplatte nebeneinander angeordnete Induktionsheizvorrichtungen. Es ist beschrieben, dass diese an einem nicht dargestellten Träger befestigt sind. Die an die Unterseite der Kochfeldplatte angelegte Induktionsspule ist über eine Verbindung mit einem Umrichter verbunden. Die Verbindung ist zum einen mechanisch halternd und zum anderen elektrisch leitend und kann beispielsweise eine Steckverbindung sein.

Aus der DE 23 57 169 A geht u.a. ein Ausführungsbeispiel hervor, bei welchem die abgegebene Leistung durch eine Verstellung der Spuleneinheit in Richtung auf das zu erhitzende Gut oder von diesem weg erfolgt. Die Bewegung der Spuleneinheit erfolgt mittels eines Scherenhebelpaars, welches die Spuleneinheit trägt und über welches die Spuleneinheit mit einem Stützelement verbunden ist.

Aufgabe der Erfindung ist es eine vorteilhafte Induktionsheizvorrichtung der eingangs genannten Art bereitzustellen, die eine einfache Montage und gegebenenfalls Demontage in einem Herd ermöglicht, dies bei einer guten thermischen Trennung zwischen der Spuleneinheit und der Umrichtereinheit.

Erfindungsgemäß gelingt dies durch eine Induktionsheizvorrichtung mit den Merkmalen des Anspruchs 1.

Bei der Induktionsheizvorrichtung gemäß der Erfindung ist die Spuleneinheit mit der Umrichtereinheit über eine Hebelvorrichtung verbunden. Hierbei kann die Spuleneinheit gegenüber der Umrichtereinheit mittels mindestens eines Stellteils angehoben und abgesenkt werden. Der Abstand zwischen der Spuleneinheit und der Umrichtereinheit ist somit durch Betätigung des mindestens einen Stellteils verstellbar.

Die erfindungsgemäße Ausbildung ermöglicht eine einfache Anpassung an die Höhe eines Zwischenraums zwischen der Kochfeldplatte und der unteren Begrenzungsplatte eines Induktionsherdes. Die Verbindung zwischen der Spuleneinheit und der Umrichtereinheit kann hierbei, abgesehen von der elektrischen Verbindung, lediglich von der Hebelvorrichtung gebildet werden, wobei die Spuleneinheit und die Umrichtereinheit ansonsten durch einen Zwischenraum voneinander getrennt sind.

Günstigerweise nimmt das Stellteil in verschiedenen Einstellungen der Lage der Spuleneinheit unterschiedliche Stellpositionen ein und ist vorzugsweise in einer jeweiligen Stellposition durch zusammenwirkende Rastelemente, beispielsweise Zähne einer Verzahnung, in welche ein Einrastteil eingreift, gehalten.

In einer vorteilhaften Ausführungsform der Erfindung ist die Spuleneinheit in einer jeweils eingestellten Position, in welcher sie einen Abstand von der Umrichtereinheit aufweist, einfederbar, d.h. gegen die Federkraft mindestens einer Feder über einen Federweg in Richtung zur Umrichtereinheit verschiebbar.

Eine solche Ausbildung ermöglicht es, die Induktionsheizvorrichtung im abgesenkten Zustand der Spuleneinheit in den Zwischenraum zwischen der Kochfeldplatte und der unteren Begrenzungsplatte an die gewünschte Stelle unterhalb der Kochfeldplatte einzuschieben und in der Folge mittels des mindestens einen Stellteils die Spuleneinheit anzuheben, bis sie an die Unterseite der Kochfeldplatte angedrückt ist und hierbei über einen Teil ihres Federweges eingefedert ist. Dies ermöglicht eine sehr rasche und zuverlässige Montage, unabhängig vom genauen Abstand zwischen der Kochfeldplatte und der unteren Begrenzungsplatte, wobei die Spuleneinheit sich in einer definierten, an die Unterseite der Kochfeldplatte angedrückten Lage befindet.

Günstigerweise kann die Feder bzw. eine jeweilige Feder, direkt auf einen bzw. einen jeweiligen Hebel der Hebelvorrichtung einwirken. Die Hebelvorrichtung dient somit nicht nur zur Beabstandung der Spuleneinheit von der Umrichtereinheit und zur Einstellung des Abstandes sondern auch das Einfedern der Spuleneinheit gegenüber der Umrichtereinheit erfolgt unter Verschwenkung der Hebel der Hebelvorrichtung mit einer hierbei erfolgenden Spannung der mindestens einen Feder. In einer alternativen Ausbildung wäre es denkbar und möglich, die Induktionsspule gegenüber einem Basiskörper der Spuleneinheit, welches über die Hebelvorrichtung mit der Umrichtereinheit verbunden ist, gegen die Kraft der mindestens einen Feder elastisch auslenkbar zu lagern.

Gemäß einer vorteilhaften Ausbildung wird die Hebelvorrichtung, über welche die Spuleneinheit mit der Umrichtereinheit verbunden ist, von mindestens einem Scherenhebelpaar gebildet. Vorzugsweise sind zwei beabstandete Scherenhebelpaare vorgesehen, die um parallele Achsen verschwenkbar gegeneinander sowie gegenüber der Spuleneinheit und gegenüber der Umrichtereinheit verschwenkbar gelagert sind. Ein jeweiliges Scherenhebelpaar wird von ersten und zweiten Scherenhebeln gebildet, die über Kreuz gelegt und am Kreuzungspunkt verschwenkbar miteinander verbunden sind. Es wird dadurch eine einfache und zweckmäßige Konstruktion der Induktionsheizvorrichtung ermöglicht.

Scherenhebelpaare zur Höhenverstellung sind grundsätzlich bekannt, insbesondere von Hubtischen, aber auch von anderen Anwendungen her. So geht aus der DE 10 2008 050 877 A1 eine Verschlussplatte zum Verschließen einer Ausnehmung in einer Tischplatte hervor, wobei diese Verschlussplatte unter Gewichtsbelastung absenkbar ist. In einer der dargestellten Ausführungsformen ist hierzu ein Scherenhebelpaar vorgesehen. In einigen Ausführungsbeispielen ist die Verschlussplatte als Heizplatte ausgebildet.

Zur Ermöglichung des Einfederns der Spuleneinheit in Richtung zur Umrichtereinheit bei einer auf die Spuleneinheit in Richtung zur Umrichtereinheit einwirkenden äußeren Kraft (zusätzlich zur Schwerkraft) kann vorteilhafterweise vorgesehen sein, dass die Feder eine Loslager-Schwenkachse eines der Scherenhebel beaufschlagt. Der betreffende Scherenhebel ist um diese Loslager-Schwenkachse gegenüber der Umrichtereinheit oder auch gegenüber der Spuleneinheit verschwenkbar gelagert, wobei sich die Loslager-Schwenkachse gegenüber der Umrichtereinheit (wenn der Scherenhebel um diese Loslager-Schwenkachse gegenüber der Umrichtereinheit verschwenkbar ist) oder gegenüber der Spuleneinheit (wenn der Scherenhebel um diese Loslager-Schwenkachse gegenüber der Spuleneinheit verschwenkbar ist) ausgehend von einer Grundstellung gegen die Kraft der Feder verschieben kann. Von der Feder wird die Loslager-Schwenkachse in eine Grundstellung beaufschlagt, in welcher sich die Loslager-Schwenkachse befindet, wenn auf die Spuleneinheit keine äußere Kraft in Richtung zur Umrichtereinheit einwirkt (abgesehen von der Schwerkraft). Beim Einfedern der Spuleneinheit, also bei einer Verringerung des Abstandes zwischen der Spuleneinheit und der Umrichtereinheit ohne Veränderung der eingestellten Lage der Spuleneinheit mittels des Stellteils, verschiebt sich die Loslager-Schwenkachse von ihrer Grundstellung weg gegen die Kraft der Feder.

Es ist hierbei bevorzugt, wenn die Loslager-Schwenkachse, welche von der Feder in Richtung der Grundstellung beaufschlagt wird, eine verschwenkbare Lagerung eines der Scherenhebel des mindestens einen Scherenhebelpaars gegenüber dem Stellteil darstellt. Die Feder wirkt dann zwischen dem um diese Loslager-Schwenkachse verschwenkbare gelagerten Loslagerende des betreffenden Scherenhebels und dem Stellteil. Beispielsweise kann das Stellteil ein Langloch aufweisen, welches von einem die Loslager-Schwenkachse bildenden Achsbolzen am Loslagerende des Scherenhebels durchsetzt wird. Insbesondere kann dieses Langloch eine horizontale Ausrichtung aufweisen und das Stellteil wird zum Anheben und Absenken der Spuleneinheit horizontal verstellt. Die von der Feder beaufschlagte Loslager-Schwenkachse bewegt sich hierbei, so lange (abgesehen von der Schwerkraft) keine äußere Kraft auf die Spuleneinheit einwirkt, durch welche die Spuleneinheit in Richtung zur Umrichtereinheit gedrückt wird, zusammen mit dem Stellteil bei dessen horizontaler Verstellung und verbleibt hierbei in ihrer Grundstellung.

Wenn in dieser Schrift von oben, unten, horizontal und vertikal die Rede ist, so bezieht sich dies auf die Arbeitsstellung der Induktionsheizvorrichtung, in welcher die Umrichtereinheit auf einem ebenen horizontalen Untergrund abgestellt ist und die Spuleneinheit sich oberhalb der Umrichtereinheit befindet.

Weitere Vorteile und Einzelheiten der Erfindung werden im Folgenden anhand der beiliegenden Zeichnung erläutert. In dieser zeigen:
Fig. 1 und 2 Ansichten einer Induktionsheizvorrichtung gemäß der Erfindung auf gegenüberliegende Seiten der Induktionsheizvorrichtung, die Spuleneinheit in einer ersten Position ihrer Höhe eingestellt;
Fig. 3 und 4 eine Vorder- und eine Rückansicht der Induktionsheizvorrichtung in der Position der Spuleneinheit entsprechend Fig. 1 und 2;
Fig. 5 und 6 Seitenansichten entsprechend Fig. 1 in der vollständig abgesenkten Stellung der Spuleneinheit und in einer gegenüber Fig. 1 weiter angehobenen Position der Spuleneinheit;
Fig. 7 eine Seitenansicht entsprechend Fig. 1, die Spuleneinheit in die gleiche Position eingestellt, aber eingefedert, zusammen mit einer Kochfeldplatte und einer unteren Begrenzungsplatte, zwischen die die Induktionsheizvorrichtung eingesetzt ist;
Fig. 8 eine Seitenansicht eines der Stellteile.

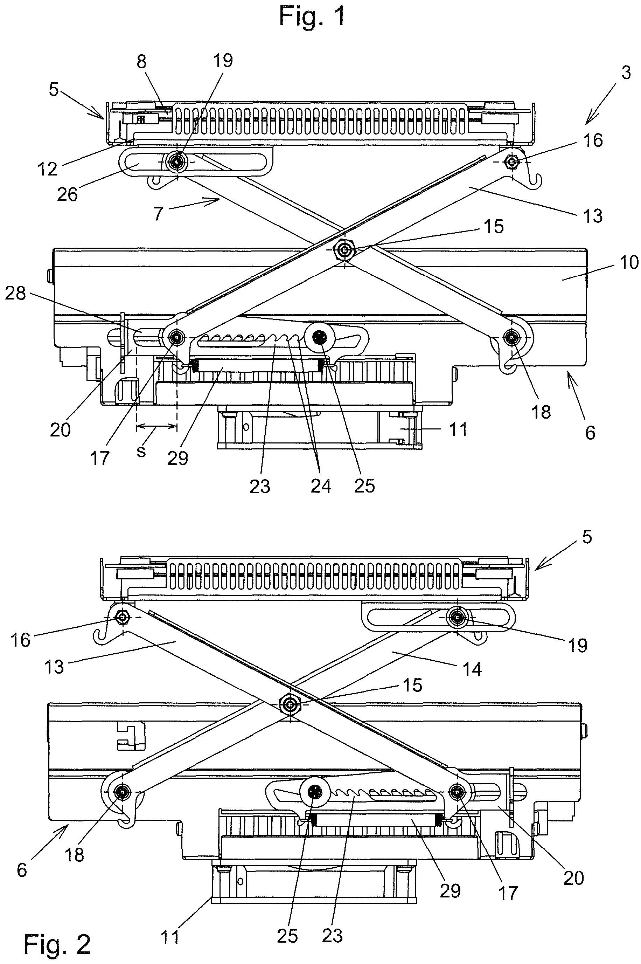

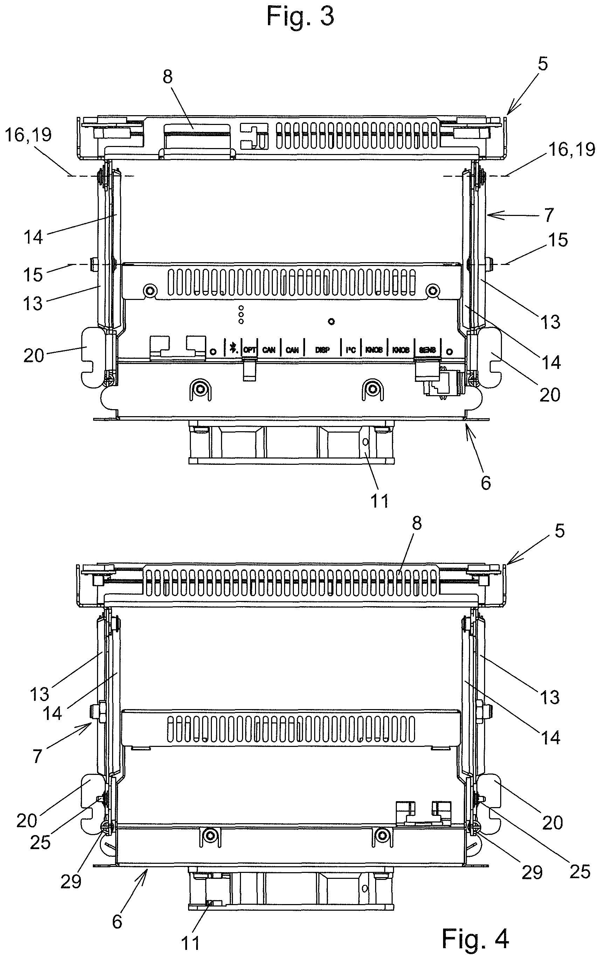

Ein Ausführungsbeispiel der Erfindung ist in den Fig. 1 bis 8 dargestellt.

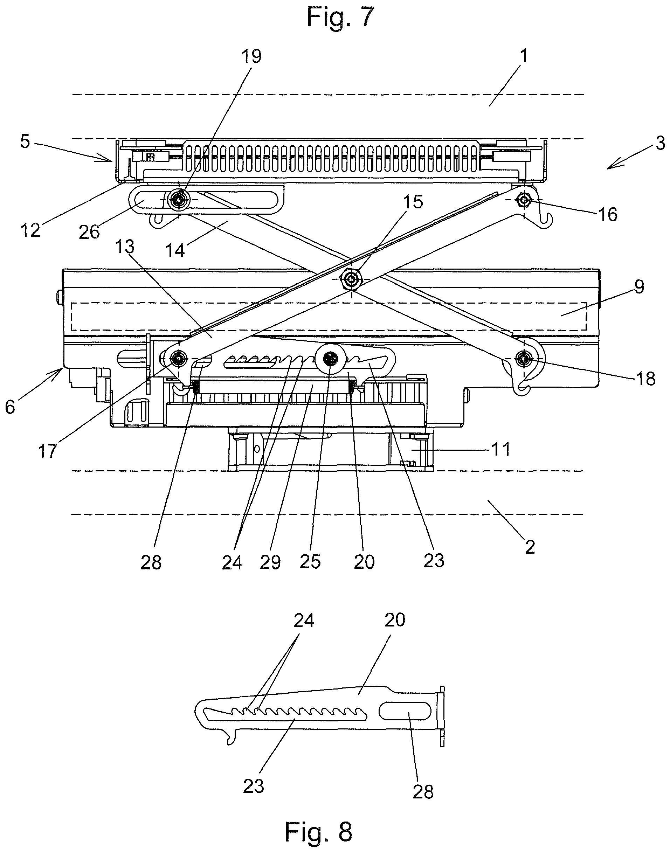

Die Induktionsheizvorrichtung 3 ist zum Einbau zwischen einer Kochfeldplatte 1, bei welcher es sich insbesondere um eine Glaskeramikplatte handelt, und einer unteren Begrenzungsplatte 2 vorgesehen, wie dies in Fig. 7 schematisch dargestellt ist und weiter unten genauer erläutert wird. Das die Induktionsheizvorrichtung 3 aufweisende Kochfeld 4 kann weitere Induktionsheizvorrichtungen umfassen (und somit insgesamt als Induktionskochfeld ausgebildet sein) und/oder zusätzliche andere Heizvorrichtungen aufweisen (und somit als gemischtes Kochfeld ausgebildet sein). Das Kochfeld 4 kann in verschiedene Kochplatten unterteilt sein, wie dies in Fig. 7 nicht im Einzelnen dargestellt ist.

Die Induktionsheizvorrichtung 3 umfasst eine Spuleneinheit 5 und eine Umrichtereinheit 6, welche als separate Baueinheiten ausgebildet sind, die über eine insgesamt mit den Bezugszeichen 7 bezeichnete Hebelvorrichtung mechanisch verbunden sind. Im Weiteren ist eine, in den Figuren der Einfachheit halber nicht dargestellte elektrische Verbindung zwischen der Spuleneinheit 5 und der Umrichtereinheit 6 vorgesehen.

Die Spuleneinheit 5 weist die Induktionsspule 8 zur Erzeugung eines Induktionsfeldes auf. Es handelt sich hierbei um ein magnetisches Wechselfeld, dessen Frequenz insbesondere im Bereich von 17 kHz bis 100 kHz liegen kann. Dieses Induktionsfeld erzeugt in einem auf die Kochfeldplatte 1 oberhalb der Induktionsspule 8 gestellten metallischen Topf durch Induktion Wirbelströme, die das Metall des Topfes durch dessen ohmschen Widerstand aufheizen.

Die Umrichtereinheit 6 weist einen nur in Fig. 7 durch strichlierte Linien schematisch angedeuteten Umrichter 9 auf. Dieser dient zur elektrischen Ansteuerung der Induktionsspule 8. Der Umrichter kann hierbei in herkömmlicher Weise ausgebildet sein. So kann der Umrichter eine Umrichter-Schaltung aufweisen, die Kondensatoren umfasst, welche mit der Induktionsspule 8 einen Schwingkreis bilden, der von Schalttransistoren betrieben wird. Im Weiteren kann der Umrichter 9 eine Umrichter-Steuerung aufweisen, welche vorteilhafterweise einen Mikrokontroller umfasst. Der Umrichter 9 ist in einem Gehäuse 10 der Umrichtereinheit 6 angeordnet. Im Weiteren umfasst die Umrichtereinheit 6 im Ausführungsbeispiel einen an der Außenseite des Gehäuses 10 angeordneten Ventilator 11.

Die Induktionsspule 8 ist auf einem Basiskörper 12 der Spuleneinheit 5 angeordnet und wird von diesem getragen. Der Basiskörper 12 ist mit der Hebelvorrichtung 7 verbunden und wird von dieser getragen. Die Hebelvorrichtung 7 ist andererseits mit dem Gehäuse 10 der Umrichtereinheit 6 verbunden.

Der Basiskörper 12 kann beispielsweise von einem Blechteil, z.B. aus Aluminiumblech, mit randseitig aufgebogenen Randabschnitten gebildet werden, sodass eine nach oben offene Schalenform ausgebildet wird, in welcher die Induktionsspule 8 aufgenommen ist. Die Induktionsspule 8 kann in an sich bekannter Weise auf Ferritblöcken auf dem Basiskörper 12 gelagert sein. Die Induktionsspule 8 kann in herkömmlicher Weise ausgebildet sein.

Die Hebelvorrichtung zur Verbindung der Spuleneinheit 5 mit der Umrichtereinheit 6 wird von zwei Scherenhebelpaaren gebildet. Jedes der Scherenhebelpaare wird von einem ersten und einem zweiten Scherenhebel 13, 14 gebildet. Die Scherenhebel 13, 14 verlaufen kreuzförmig zueinander und sind am Kreuzungspunkt um eine Schwenkachse 15 drehbar miteinander verbunden. Die Schwenkachsen 15 der beiden Scherenhebelpaare liegen parallel zueinander, vorzugsweise auf einer gemeinsamen Geraden. Die Scherenhebel 13, 14 jedes der Scherenhebelpaare sind im Bereich ihrer oberen Enden verschwenkbar mit der Spuleneinheit 5 und im Bereich ihrer unteren Enden mit der Umrichtereinheit 6 verschwenkbar verbunden. Die schwenkbare Verbindung der beiden Scherenhebelpaare mit der Umrichtereinheit 6 erfolgt hierbei im Bereich von gegenüberliegenden, voneinander weggerichteten Seitenflächen des Gehäuses 10.

Ein erster Scherenhebel 13 eines jeweiligen Scherenhebelpaars ist an seinem oberen Ende, welches als Festlagerende bezeichnet werden kann, um eine Festlager-Schwenkachse 16 verschwenkbar mit der Spuleneinheit 5 verbunden und steht an seinem unteren Ende, welches als Loslagerende bezeichnet werden kann, um eine Loslager-Schwenkachse 17 verschwenkbar mit der Umrichtereinheit 6 in Verbindung. Die Festlager-Schwenkachse 16 ist gegenüber der Spuleneinheit 5 unverschiebbar. Die Loslager-Schwenkachse 17 ist gegenüber der Umrichtereinheit 6 verschiebbar, insbesondere horizontal verschiebbar, wobei die Verbindung mit der Umrichtereinheit 6 über ein Stellteil 20 erfolgt. Das Loslagerende des ersten Scherenhebels 13 ist hierbei vom Stellteil 20 um die Loslagerschwenkachse 17 verschwenkbar gelagert. Das Stellteil 20 ist zur Anhebung der Spuleneinheit 5 gegenüber der Umrichtereinheit 6 in eine Anhebe-Einstellrichtung 21 gegenüber der Umrichtereinheit 6 verstellbar, insbesondere geradlinig, vorzugweise horizontal. Zur Absenkung der Spuleneinheit 5 gegenüber der Umrichtereinheit 6 ist das Stellteil 20 in eine der Anhebe-Einstellrichtung 21 entgegengesetzte Absenk-Einstellrichtung 22 gegenüber der Umrichtereinheit 6 verstellbar, insbesondere geradlinig, vorzugweise horizontal.

Die jeweils eingestellte Position des Stellteils 20 ist durch zusammenwirkende Rastelemente gesichert. Im Ausführungsbeispiel weist das Stellteil 20 ein, insbesondere horizontal verlaufendes, Einstell-Langloch 23 mit einem gezahnten oberen Rand auf. Mit den Zähnen 24 dieser Verzahnung wirkt ein Rastbolzen 25 zusammen. Der Rastbolzen kann in den Zwischenräumen zwischen aufeinanderfolgenden Zähnen 24 aufgenommen werden.

Der zweite Scherenhebel 14 eines jeweiligen Scherenhebelpaars ist an seinem unteren Ende, welches als Festlagerende bezeichnet werden kann, um eine Festlager-Schwenkachse 18 verschwenkbar mit der Umrichtereinheit 6 verbunden und steht an seinem oberen Ende, welches als Loslagerende bezeichnet werden kann, um eine Loslager-Schwenkachse 19 verschwenkbar mit der Spuleneinheit 5 in Verbindung. Die Festlager-Schwenkachse 18 ist gegenüber der Umrichtereinheit 6 unverschiebbar. Die Loslager-Schwenkachse 19 ist gegenüber der Spuleneinheit 5 verschiebbar, insbesondere geradlinig, vorzugsweise in horizontaler Richtung. Die Loslager-Schwenkachse 19 wird im Ausführungsbeispiel von einem am Loslagerende des zweiten Scherenhebels 14 angebrachten Achsstift gebildet, der ein Langloch 26 in einer an der Unterseite des Basiskörpers 12 der Spuleneinheit 5 angebrachten Lagerlasche 27 durchsetzt.

Die Loslager-Schwenkachse 17 des ersten Scherenhebels 13 ist auch gegenüber dem Stellteil 20 verschiebbar, insbesondere geradlinig, vorzugsweise horizontal. Hierzu durchsetzt im Ausführungsbeispiel ein am Loslagerende des ersten Scherenhebels 13 angebrachter Achsbolzen ein weiteres Langloch im Stellteil 20, welches im Folgenden als Einfeder-Langloch 28 bezeichnet wird. Zwischen dem Loslagerende des ersten Scherenhebels 13 und dem Stellteil 20 wirkt eine Feder 29. Die Feder 29 kann beispielsweise wie dargestellt von einer Schraubenfeder gebildet werden. Die Feder 29 hält die Loslager-Schwenkachse 17 in einer Grundstellung, wenn auf die Spuleneinheit 5 abgesehen von der Schwerkraft keine äußere Kraft einwirkt. Der Achsbolzen am unteren Ende des ersten Scherenhebels 13 ist dann an eines der Enden des Einfeder-Langlochs 28 gedrückt. Wird die Spuleneinheit 5 von einer (zusätzlich zur Schwerkraft einwirkenden) äußeren Kraft nach unten gedrückt, so kann sich die Loslager-Schwenkachse 17 gegen die Kraft der Feder 29 im Einfeder-Langloch 28 verschieben. Damit verschiebt sich die Loslager-Schwenkachse 17 gegenüber dem Stellteil 20 und somit auch gegenüber der Umrichtereinheit 6. Die maximale Verschiebestrecke s ergibt sich hierbei aus der Länge des Einfeder-Langlochs 28 abzüglich des Durchmessers des am Loslagerende des ersten Scherenhebels 13 angebrachten Achsbolzens.

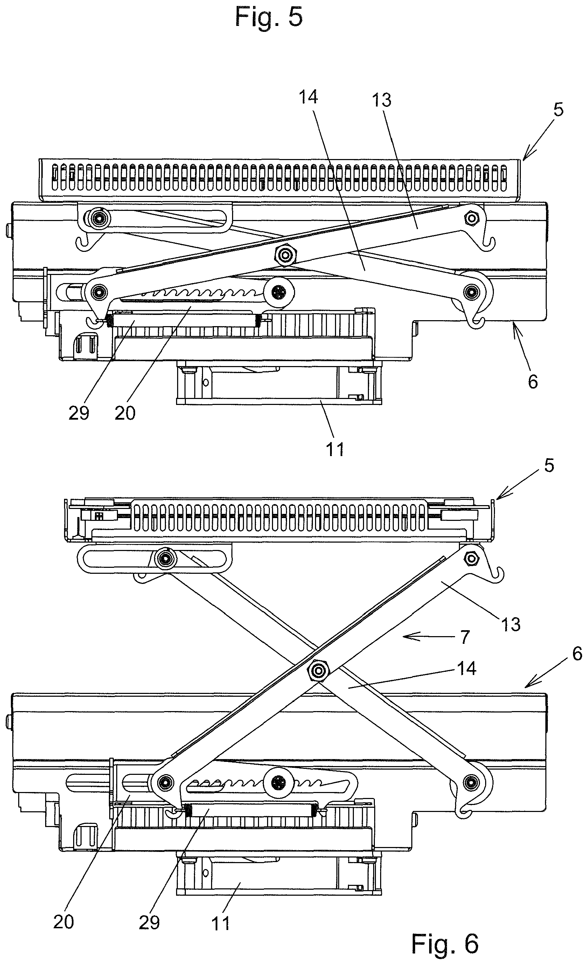

In Fig. 5 ist die vollständig abgesenkte Stellung der Spuleneinheit 5 dargestellt. Die Spuleneinheit 5 kann hierbei wie dargestellt auf der Umrichtereinheit 6 aufliegen. In den Fig. 1 bis 4 ist eine demgegenüber angehobene Position der Spuleneinheit 5 dargestellt. Die Rastbolzen 25 an den beiden Seiten des Gehäuses 10 sind in die erste Rastposition zwischen zwei Zähnen 24 der Verzahnung des Stellteils 20 eingerastet. Die Spuleneinheit 5 ist aber nicht eingefedert, d.h. die Loslager-Schwenkachse 17 befindet sich in ihrer Grundstellung.

In Fig. 7 ist der Rastbolzen 25 in der gleichen Position eingerastet wie in der in den Fig. 1 bis 4 dargestellten Position, die Spuleneinheit 5 aber teilweise eingefedert.

Da die Zähne 24 gegenüber der Vertikalen schräg in Richtung der Absenk-Einstellrichtung 22 gestellt sind, hält die Gewichtskraft der Spuleneinheit 5 den Rastbolzen 25 im Eingriff zwischen den Zähnen 24.

Zur Anhebung der Spuleneinheit 5 gegenüber der Umrichtereinheit 6 werden die Stellteile 20 an den gegenüberliegenden Seiten der Umrichtereinheit 6 in die Anhebe-Einstellrichtung 21 verschoben und der jeweilige Rastbolzen 25 in der gewünschten Position zwischen zwei Zähnen 24 eingerastet.

Um die Spuleneinheit 5 gegenüber der Umrichtereinheit 6 abzusenken, werden die Stellteile 20 um die Loslager-Schwenkachsen 17 verschwenkt, sodass der jeweilige Rastbolzen 25 außer Eingriff der Zähne 24 gebracht wird, worauf die Stellteile 20 in die Absenk-Einstellrichtung 21 verschoben werden und die Rastbolzen 25 dann in der gewünschten Stellung des jeweiligen Stellteils 20 zwischen zwei Zähne 24 eingerastet werden oder der vollständig abgesenkte Zustand der Spuleneinheit 5 eingenommen wird, vgl. Fig. 5.

Zur Montage der Induktionsheizvorrichtung wird die Induktionsheizvorrichtung im, vorzugsweise vollständig, abgesenkten Zustand der Spuleneinheit 5 in den Zwischenraum zwischen die Kochfeldplatte 1 und die untere Begrenzungsplatte 2 an die gewünschte Stelle eingeschoben und auf der unteren Begrenzungsplatte 2 abgestellt. In der Folge wird die Spuleneinheit 5 durch Verschieben der Stellteile 20 in die Anhebe-Einstellrichtung 21 so weit angehoben, bis sie an die Unterseite der Kochfeldplatte 1 angedrückt ist und hierbei einen teilweise eingefederten Zustand einnimmt, wie dies in Fig. 7 dargestellt ist.

Obwohl eine Anordnung der Stellteile 20 im Bereich der Umrichtereinheit 6 bevorzugt ist, wäre es grundsätzlich auch denkbar und möglich, diese im Bereich der Spuleneinheit 5 vorzusehen, wobei die Stellteile 20 an der Spuleneinheit 5 in die Anhebe-Einstellrichtung und Absenk-Einstellrichtung verschiebbar gelagert sind. Die Ausbildung könnte völlig analog sein.

Die Feder 29 muss nicht unbedingt auf dasjenige Loslagerende einwirken, welches mittels des Stellteils 20 gegenüber der betreffenden Einheit 5, 6 verschiebbar ist. Die Loslager-Schwenkachse 17, über welche der erste Scherenhebel 13 gegenüber dem Stellteil 20 verschwenkbar gelagert ist, könnte bei einer solchen Ausbildung gegenüber dem Stellteil 20 unverschiebbar sein und der erste Scherenhebel 20 könnte am anderen Ende ebenfalls um eine Loslager-Schwenkachse verschwenkbar gelagert sein, welche gegenüber der Spuleneinheit 5 verschiebbar ist, insbesondere geradlinig, vorzugweise horizontal. Diese weitere Loslager-Schwenkachse wäre hierbei von der Feder in einer Grundstellung gehalten, wenn auf die Spuleneinheit keine äußere Kraft einwirkt, abgesehen von der Schwerkraft. Beim Eindrücken der Spuleneinheit 5 könnte sich diese weitere Loslager-Schwenkachse gegen die Kraft der Feder verschieben. Auch eine umgekehrte Anordnung, bei welcher das Stellteil an der Spuleneinheit 5 verschiebbar gelagert ist und die weitere Loslager-Schwenkachse sich am unteren Ende des ersten Scherenhebels befindet, wobei die Feder zwischen der Spuleneinheit 5 und dem unteren Ende des ersten Scherenhebels wirkt, ist ebenfalls denkbar und möglich.

Grundsätzlich könnte auch nur ein einzelnes Scherenhebelpaar vorgesehen sein oder es könnten mehr als zwei Scherenhebelpaare vorhanden sein. Im Falle der Ausbildung mit nur einem einzelnen Scherenhebelpaar, wäre dies vorzugsweise in einem mittleren Bereich zwischen den beiden Randseiten der Umrichtereinheit und der Spuleneinheit anzuordnen.

Insbesondere im Fall der Ausbildung mit nur einem einzelnen Scherenhebelpaar könnte auch nur ein einzelnes Stellteil vorhanden sein.

**Legende zu den Hinweisziffern:**

| | | | |
|---|---|---|---|
| 1 | Kochfeldplatte | 16 | Festlager-Schwenkachse |
| 2 | Begrenzungsplatte | 17 | Loslager-Schwenkachse |
| 3 | Induktionsheizvorrichtung | 18 | Festlager-Schwenkachse |
| 4 | Kochfeld | 19 | Loslager-Schwenkachse |
| 5 | Spuleneinheit | 20 | Stellteil |
| 6 | Umrichtereinheit | 21 | Anhebe-Einstellrichtung |
| 7 | Hebelvorrichtung | 22 | Absenk-Einstellrichtung |
| 8 | Induktionsspule | 23 | Langloch |
| 9 | Umrichter | 24 | Zahn |
| 10 | Gehäuse | 25 | Rastbolzen |
| 11 | Ventilator | 26 | Einstell-Langloch |
| 12 | Basiskörper | 27 | Lagerlasche |
| 13 | erster Scherenhebel | 28 | Einfeder-Langloch |
| 14 | zweiter Scherenhebel | 29 | Feder |
| 15 | Schwenkachse | | |

## Patentansprüche

1. Induktionsheizvorrichtung für ein Induktionskochfeld, umfassend eine Spuleneinheit (5), welche zumindest eine Induktionsspule (8) zur Erzeugung eines Induktionsfeldes aufweist, und eine Umrichtereinheit (6), welche zumindest einen Umrichter (9) zur Ansteuerung der Induktionsspule (8) aufweist und mit welcher die Spuleneinheit (5) mechanisch verbunden ist, **dadurch gekennzeichnet, dass** die Spuleneinheit (5) mit der Umrichtereinheit (6) über eine Hebelvorrichtung (13, 14) verbunden ist und mittels mindestens eines Stellteils (20) gegenüber der Umrichtereinheit (6) anhebbar und absenkbar ist, wobei die Spuleneinheit (5) in einer eingestellten Position gegen die Federkraft mindestens einer Feder (29), die auf einen Hebel (13) der Hebelvorrichtung (13, 14) einwirkt, über einen Federweg in Richtung zur Umrichtereinheit (6) verschiebbar ist.

2. Induktionsheizvorrichtung nach Anspruch 1, **dadurch gekennzeichnet, dass** einer der Scherenhebel (13) an einem Loslagerende gegenüber dem Stellteil (20) verschwenkbar gelagert ist und das Stellteil (20) zur Anhebung der Spuleneinheit (5) unter Mitnahme des Loslagerendes in eine Anhebe-Einstellrichtung (21) und zur Absenkung der Spuleneinheit (5) in eine der Anhebe-Einstellrichtung (21) entgegengesetzte Absenk-Einstellrichtung (22) verstellbar ist.

3. Induktionsheizvorrichtung nach Anspruch 1 oder 2, **dadurch gekennzeichnet, dass** die Spuleneinheit (5) mit der Umrichtereinheit (6) über mindestens ein Scherenhebelpaar verbunden ist, welches von ersten und zweiten Scherenhebeln (13, 14) gebildet wird, die über Kreuz gelegt und am Kreuzungspunkt um eine Schwenkachse (15) verschwenkbar miteinander verbunden sind.

4. Induktionsheizvorrichtung nach Anspruch 3, **dadurch gekennzeichnet, dass** die Feder (29) eine Loslager-Schwenkachse (17) eines der Scherenhebel (13) beaufschlagt, um welche dieser Scherenhebel (13) um die Loslager-Schwenkachse (17) gegenüber der Umrichtereinheit (6) oder gegenüber der Spuleneinheit (5) verschwenkbar gelagert ist, wobei die Loslager-Schwenkachse (17), falls dieser Scherenhebel (13) um die Loslager-Schwenkachse (17) gegenüber der Umrichtereinheit (6) verschwenkbar gelagert ist, gegenüber der Umrichtereinheit (6) oder, falls dieser Scherenhebel (13) um die Loslager-Schwenkachse (17) gegenüber der Spuleneinheit (5) verschwenkbar gelagert ist, gegenüber der Spuleneinheit (5) verschiebbar ist und die Loslager-Schwenkachse (17) von der Feder (29) in eine Grundstellung beaufschlagt ist und sich beim Einfedern der Spuleneinheit (5) gegenüber der Umrichtereinheit (6) gegen die Kraft der Feder (29) verschiebt.

5. Induktionsheizvorrichtung nach Anspruch 4, **dadurch gekennzeichnet, dass** die Feder (29) zwischen dem Loslagerende des Scherenhebels (13), welcher um die Loslager-Schwenkachse (17) gegenüber dem Stellteil (20) verschwenkbar gelagert ist, und dem Stellteil (20) wirkt.

6. Induktionsheizvorrichtung nach Anspruch 5, **dadurch gekennzeichnet, dass** ein die Loslager-Schwenkachse (17) bildender Achsbolzen in einem Einfeder-Langloch (28) des Stellteils (20) verschiebbar geführt ist.

7. Induktionsheizvorrichtung nach einem der Ansprüche 1 bis 6, **dadurch gekennzeichnet, dass** das Stellteil (20) ein Einstell-Langloch (23) aufweist, welches von einem Rastbolzen (25) durchsetzt ist, wobei ein Rand des Einstell-Langlochs (23) mit einer Verzahnung versehen ist, zwischen deren Zähne (24) der Rastbolzen (25) zur Fixierung der eingestellten Position des Stellteils (20) einrastbar ist.

## Claims

1. Induction heating device for an induction hob, comprising a coil unit (5) which has at least one induction coil (8) for generating an induction field and a converter unit (6) which has at least one converter (9) for actuating the induction coil (8) and with which the coil unit (5) is mechanically connected, **characterised in that** the coil unit (5) is connected with the converter unit (6) via a lever device (13, 14) and can be raised and lowered in relation to the converter unit (6) by means of at least one adjuster part (20), wherein, in a set position, the coil unit (5) can be moved, against the spring force of least one spring (29) which acts on a lever (13) of the lever device (13, 14), over a spring travel path in the direction of the converter unit (6).

2. Induction heating device according to claim 1, **characterised in that** one of the scissor levers (13) is mounted on a floating bearing end so as to swivel relative to the adjuster part (20), and the adjuster part (20) can be moved in a raising adjusting direction (21) in order to raise the coil unit (5), along with the floating bearing end, and can be moved in a lowering adjusting direction (22) contrary to the raising adjusting direction (21) in order to lower the coil unit (5).

3. Induction heating device according to claim 1 or 2, **characterised in that** the coil unit (5) is connected with the converter unit (6) via at least one scissor lever pair which is formed by first and second scissor levers (13, 14) which are arranged crosswise and which are connected with one another at the point of intersection so as to swivel around a swivel axis (15).

4. Induction heating device according to claim 3, **characterised in that** the spring (29) acts on a floating bearing swivel axis (17) of one of the scissor levers (13) around which this scissor lever (13) is mounted so as to swivel around the floating bearing swivel axis (17) relative to the converter unit (6) or relative to the coil unit (5), wherein, if this scissor lever (13) is mounted so as to swivel around the floating bearing swivel axis (17) relative to the converter unit (6), the floating bearing swivel axis (17) can be displaced relative to the converter unit (6) or, if this scissor lever (13) is mounted so as to swivel around the floating bearing swivel axis (17) relative to the coil unit (5), it can be displaced relative to the coil unit (5) and the floating bearing swivel axis (17) is acted on by the spring (29) in a basic position and on deflection of said spring the coil unit (5) is displaced relative to the converter unit (6) against the force of the spring (29).

5. Induction heating device according to claim 4, **characterised in that** the spring (29) acts between the floating bearing end of the scissor lever (13) which is mounted so as to swivel, relative to the adjuster part (20), around the floating bearing swivel axis (17) and the adjuster part (20).

6. Induction heating device according to claim 5, **characterised in that** an axle bolt forming the floating bearing swivel axis (17) is guided displaceably within a spring-deflection slot (28) of the adjuster part (20).

7. Induction heating device according to one of the claims 1 to 6, **characterised in that** the adjuster part (20) has an adjusting slot (23) which is passed through by a locking bolt (25), wherein one edge of the adjusting slot (23) is provided with an arrangement of teeth (24) between which the locking bolt (25) can engage in order to fix the adjuster part (20) in its set position.

## Revendications

1. Dispositif de chauffage par induction pour une table de cuisson à induction, comprenant une unité de bobine (5), laquelle comporte au moins une bobine d'induction (8) destinée à produire un champ d'induction, et une unité de convertisseur (6), laquelle comprend au moins un convertisseur (9) destiné à commander la bobine d'induction (8) et au moyen de laquelle l'unité de bobine (5) est reliée mécaniquement, **caractérisé en ce que** l'unité de bobine (5) est reliée à l'unité de convertisseur (6) par l'intermédiaire d'un dispositif à levier (13, 14) et peut être levée et abaissée par rapport à l'unité de convertisseur (6) au moyen d'au moins un élément de commande (20), l'unité de bobine (5) pouvant être déplacée dans une position réglée, à l'encontre de la force d'au moins un ressort (29) qui agit sur un levier (13) du dispositif à levier (13, 14), le long d'une course de ressort en direction de l'unité de convertisseur (6).

2. Dispositif de chauffage par induction selon la revendication 1, **caractérisé en ce qu'**un des leviers croisés (13) est monté à une extrémité de palier libre de manière à pouvoir pivoter par rapport à l'élément de commande (20), et l'élément de commande (20) peut être réglé pour lever l'unité de bobine (5) tout en entraînant l'extrémité de palier libre dans une direction de réglage de levage (21) et pour baisser l'unité de bobine (5) dans une direction de réglage d'abaissement (22) opposée à la direction de réglage de levage (21).

3. Dispositif de chauffage par induction selon la revendication 1 ou 2, **caractérisé en ce que** l'unité de bobine (5) est reliée à l'unité de convertisseur (6) par l'intermédiaire d'au moins une paire de leviers croisés, laquelle est formée par un premier et un deuxième levier croisé (13, 14) qui sont posés en croix et sont reliés l'un à l'autre au point de croisement de manière à pouvoir pivoter autour d'un axe de pivotement (15).

4. Dispositif de chauffage par induction selon la revendication 3, **caractérisé en ce que** le ressort (29) sollicite un axe de pivotement de palier libre (17) d'un des leviers croisés (13), axe autour duquel ce levier croisé (13) est monté de manière à pouvoir pivoter autour de l'axe de pivotement de palier libre (17) par rapport à l'unité de convertisseur (6) ou par rapport à l'unité de bobine (5), l'axe de pivotement de palier libre (17) pouvant être déplacé par rapport à l'unité de convertisseur (6) dans le cas où ce levier croisé (13) est monté de manière à pouvoir pivoter autour de l'axe de pivotement de palier libre (17) par rapport à l'unité de convertisseur (6), ou pouvant être déplacé par rapport à l'unité de bobine (5) dans le cas où ce levier croisé (13) est monté de manière à pouvoir pivoter autour de l'axe de pivotement de palier libre (17) par rapport à l'unité de bobine (5), et l'axe de pivotement de palier libre (17) étant sollicité par le ressort (29) dans une position de base et se déplaçant à l'encontre de la force du ressort (29) par rapport à l'unité de convertisseur (6) lors de la compression de l'unité de bobine (5).

5. Dispositif de chauffage par induction selon la revendication 4, **caractérisé en ce que** le ressort (29) agit entre l'élément de commande (20) et l'extrémité de palier libre du levier croisé (13) lequel est monté de manière à pouvoir pivoter autour de l'axe de pivotement de palier libre (17) par rapport à l'élément de commande (20).

6. Dispositif de chauffage par induction selon la revendication 5, **caractérisé en ce qu'**un axe formant l'axe de pivotement de palier libre (17) est guidé mobile dans un trou oblong de compression (28) de l'élément de commande (20).

7. Dispositif de chauffage par induction selon l'une des revendications 1 à 6, **caractérisé en ce que** l'élément de commande (20) est muni d'un trou oblong de réglage (23), lequel est traversé par un boulon d'arrêt (25), un bord du trou oblong de réglage (23) étant pourvu d'une denture entre les dents (24) de laquelle le boulon d'arrêt (25) peut être encliqueté pour fixer la position réglée de l'élément de commande (20).
